(19) **Europäisches Patentamt / European Patent Office / Office européen des brevets**

(11) **EP 1 450 230 B1**

(12) **EUROPEAN PATENT SPECIFICATION**

(45) Date of publication and mention
of the grant of the patent:
**28.09.2016  Bulletin 2016/39**

(51) Int Cl.:
*F25D 29/00* *(2006.01)*     *G05D 23/19* *(2006.01)*

(21) Application number: **03100420.3**

(22) Date of filing: **21.02.2003**

(54) **Method for controlling the temperature inside a cavity of a refrigerator or freezer**

Verfahren zur Temperaturregelung im Innenraum eines Kühl- oder Gefriergeräts

Procédé de régulation de la température à l'intérieur d'un réfrigérateur ou d'un congélateur

(84) Designated Contracting States:
**DE ES FR GB IT**

(43) Date of publication of application:
**25.08.2004  Bulletin 2004/35**

(73) Proprietor: **WHIRLPOOL CORPORATION**
**Benton Harbor**
**Michigan 49022 (US)**

(72) Inventors:
 • **Boer, Alessandro**
   **21025, Comerio (IT)**
 • **Paganini, Raffaele**
   **21025, Comerio (IT)**
 • **Bellinetto, Enrico**
   **21025, Comerio (IT)**
 • **Petrigliano, Rocco**
   **21025, Comerio (IT)**

(74) Representative: **Guerci, Alessandro**
   **Whirlpool Europe S.r.l.**
   **Patent Department**
   **Viale G. Borghi 27**
   **21025 Comerio (VA) (IT)**

(56) References cited:
   EP-A- 0 425 454     US-A- 4 089 462
   US-A- 5 765 383     US-A- 5 875 416
   US-A- 6 055 820

**Description**

The present invention relates to a method for controlling the temperature inside a cavity of a cooling appliance provided with a temperature sensor inside said cavity and with means for setting a target temperature inside the cavity.

With the term "cooling appliance" we mean every kind of refrigerator and/or freezer having a cavity for storing food at a low temperature above or below 0°C. US-A-5765383 discloses an air conditioning system for cars provided with a plurality of sensors with the aim to improve the response characteristics of control without any influence from disturbances. The temperature control of a refrigerator or freezer is obtained by adjusting the compressor cooling capacity on the basis of the temperature error parameter.

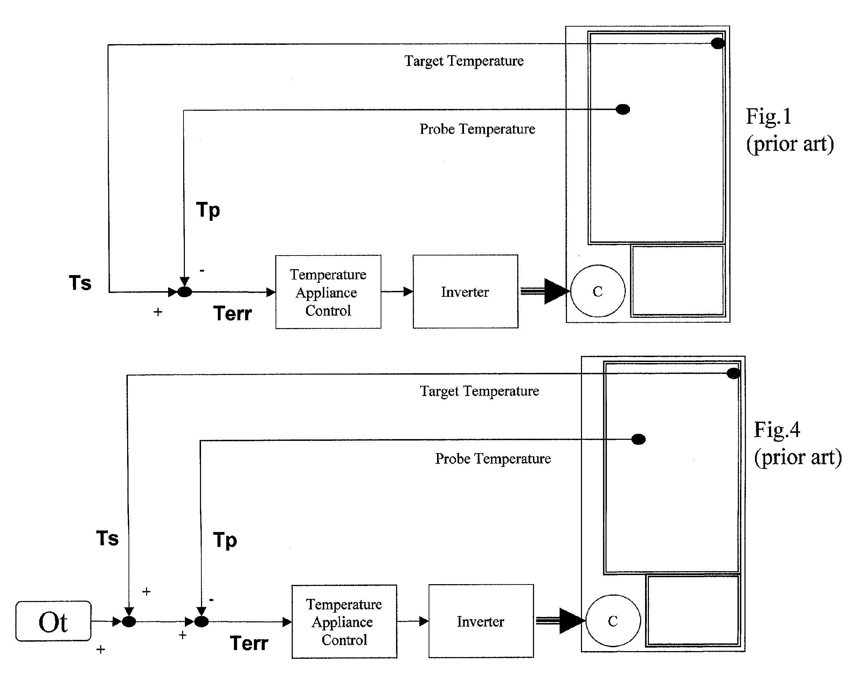

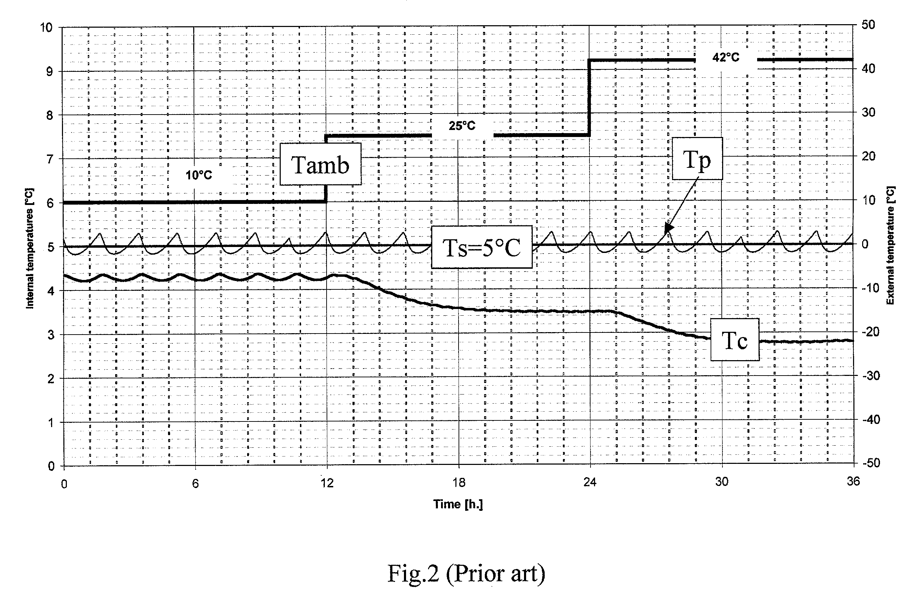

The temperature error parameter is defined as the difference between the target temperature set by user and the actual temperature in the cavity, acquired by a sensor (probe), giving a direct or indirect cell /food temperature data. A known temperature appliance control is shown in figure 1, and it might include a classical PID (Proportional-Integral-Derivative) control, in which the compressor state (ON/OFF or cooling capacity where a variable speed compressor is used) is computed on the basis of the temperature error parameter. In figure 1 with Tp is indicated the temperature detected by the probe in the cavity, with Ts the target temperature set by the user, for instance by means of a knob on the user interface of the cooling appliance, and with Terr the above mentioned temperature error parameter, i.e. the difference between the set temperature Ts and the temperature Tp detected by the probe. In figure 2 it is shown the temperature variation of the probe temperature Tp, together with the variation of the actual temperature of the food in the cavity (Tc) and the variation of the ambient temperature Tamb. The target temperature Ts in figure 2 is set for instance to 5°C. In the same figure it is also plotted the steady state probe temperature that is oscillating around the target temperature Ts and providing a Terr average value equal to zero. In these conditions, if the average set temperature Ts is under control due to a well tuned temperature regulator, there is no feedback from the real food temperature Tc. Unless a wireless temperature detection device is used, which is able to acquire the food temperature, the real food temperature measure and its control can only be obtained through an estimation.

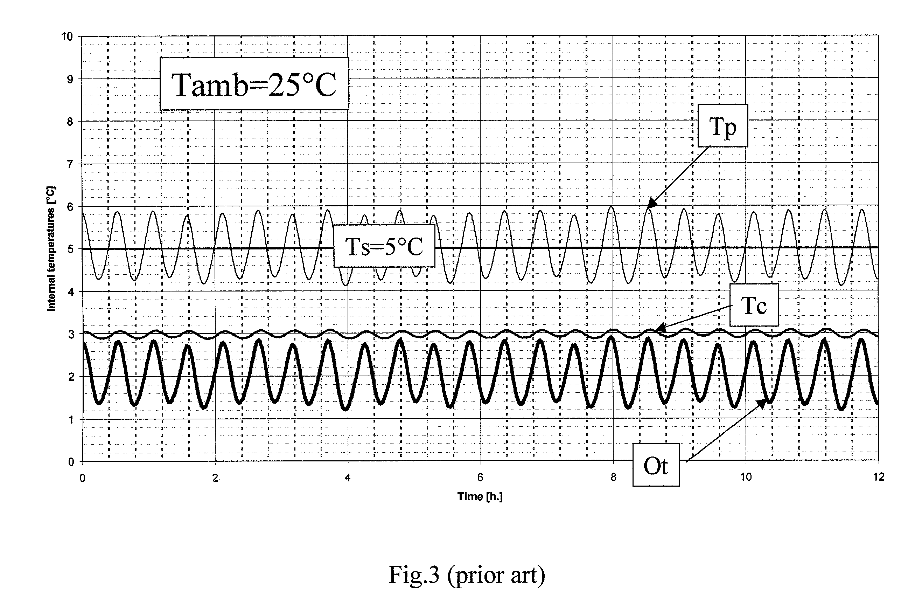

In figure 3 the difference between the probe temperature Tp and the food temperature Tc (average of the actual cell temperature) is shown when a test of a known refrigerator in standard conditions is performed. We define the difference between the probe temperature Tp and the food temperature Tc as "offset temperature" Ot; the temperature appliance control has to take in consideration the offset temperature Ot value if the right food temperature control has to be provided.

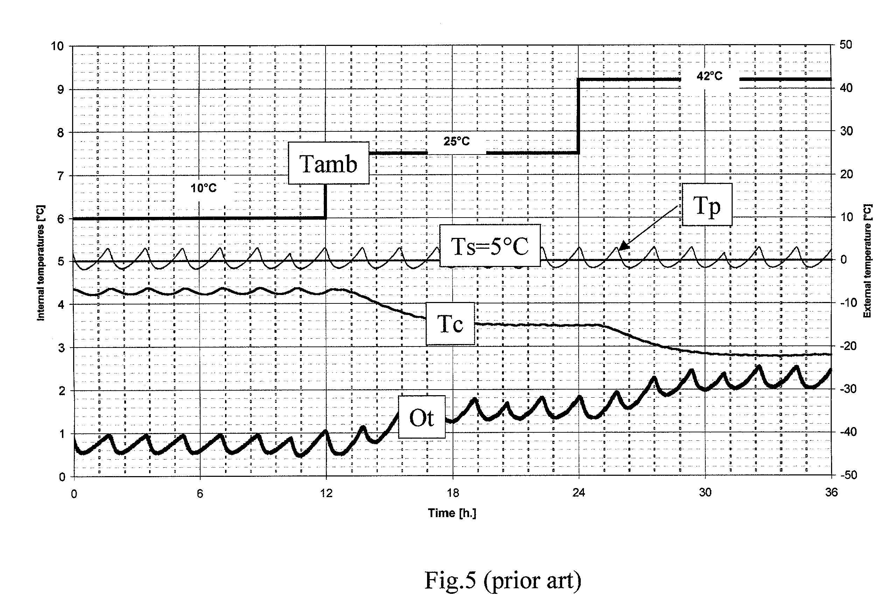

A classical known methodology is described in figure 4, in which the offset temperature value is simply added to the target temperature Ts. This methodology is not satisfactory since the offset temperature value is not a constant value. The value of the offset temperature Ot can be positive or negative according to the position of the probe sensor used in the application vs. the actual temperature in the cavity Tc. In any case the offset temperature Ot varies according to many parameters; one of the most important is the external appliance temperature (or ambient temperature Tamb). The consequence of this variation is that the food is not well controlled and not well conserved as it is clearly shown in figure 5. In such figure the ambient temperature Tamb increases with time from 10°C to 25°C and then to 42°C. Even if the average temperature error is always zero, the offset temperature Ot and the average cell temperature Tc change with time, which is not at all desirable for a proper food conservation.

According to the invention, the applicant has discovered a technique of estimating the actual temperature of the cavity Tc so that a real food temperature control can be achieved. This technique, described as follows, allows keeping the temperature of the cell or cavity of the appliance (refrigerator or freezer) independent from the external temperature variation. The technique is based on reading, together with the temperature value detected by the probe, the temperature in a different zone of the cooling appliance and on computing the heat flow (heat exchange) passing across the zones where the two temperatures are acquired. If, for instance, the evaporator temperature Tevap is sampled (i.e. the temperature on the evaporator surface or in proximity of the evaporator) and the following conditions are realised Tevap < Tc <Tp, the heat flow between the zones of the cell and the zone of the evaporator is computed according to the following mathematical expressions:

$$Tp = Tevap + (Rh1 + Rh2) * \Phi$$

$$Tc = Tevap + Rh1 * \Phi$$

$$Tc = Tevap * \left( \frac{Rh2}{Rh1 + Rh2} \right) + Tp * \left( \frac{Rh1}{Rh1 + Rh2} \right)$$

in which:

Rh1 and Rh2 represent the thermal resistances (or thermal dispersions) respectively of evaporator vs. the food placed in the cell, and of the air between the food and the probe, and
Φ represents the heat flow in the appliance.

The applicant carried out tests on a modified Whirlpool commercial refrigerator model ARC 7050 12NC 8501 705 01000. According to the above tests, the following actual values for Rh1 and Rh2 were determined:

$$Rh1 = 0.32 \frac{°C}{W} \quad , \quad Rh2 = 0.055 \frac{°C}{W}$$

In the above example, the computation of the Tc is so obtained by implementing the following formula

$$Tc = T_{evap} * 0.147 + T_p * 0.853$$

In the following description we will make reference to the appended drawings in which:

- figure 1 is a schematic view of a classical approach used to control the temperature in a refrigerator/freezer;
- figure 2 is a temperature diagram showing how the control system according to figure 1 keeps the average probe temperature under control while the food temperature varies according to external temperature;
- figure 3 shows, in a refrigerator with a control system according to figure 1, the offset temperature Ot, i.e. the difference between the temperature sensed by the probe and the average cell temperature;
- figure 4 is a schematic view of a traditional approach used to compensate the offset temperature in a refrigerator/freezer;
- figure 5 is a temperature diagram showing how the control system according to figure 4 keeps constant the average probe temperature, while either the food temperature and the offset temperature change according to external temperature;
- figure 6 is schematic representation, as an example, of an equivalent electrical circuit of the thermodynamic system of a cooling appliance according to the invention, including the heat flow from the evaporator to the food stored in the cell;
- figure 7 shows a block diagram of a Kalmann filter used to extrapolate the actual temperature of the cell Tc on the basis of empirical tests in which T1 and T2 are used (T1 and T2 being either the temperature of the cavity probe and of the evaporator probe, or the temperature of the ambient probe and of the cavity probe), together with exogenous inputs.
- figure 8 is a schematic view of the control system of a refrigerator according to the invention in which the temperature to be controlled is Tc obtained by the heat flow calculation or via a Kalmann filter; and
- figure 9 is a diagram showing the variation vs. time of different temperatures used in the control system according to the invention.

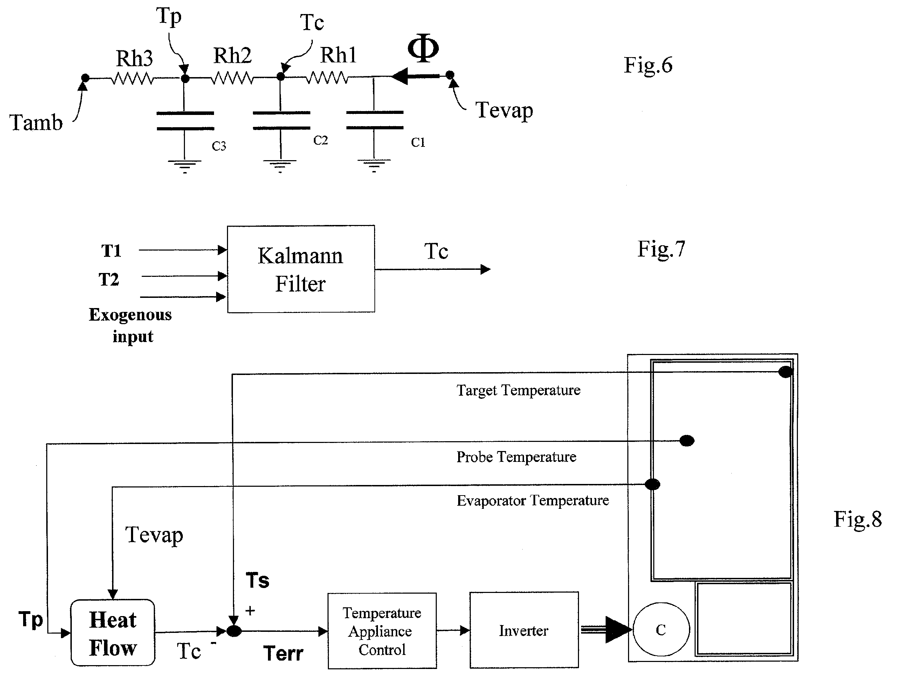

From the above described equations it can be seen that the actual temperature of the cavity or food Tc is not directly affected by the external temperature and therefore the estimation of the food temperature is so obtained. A similar solution can be achieved if Tc is evaluated starting from the Tamb side of the equivalent electrical circuit. For such technical solution the direct external temperature is compensated; this can be done by using and sampling the ambient temperature Tamb instead of the evaporator temperature Tevap.
Rh1 and Rh2 are empirically determined and depend on the heat exchanges and appliance insulation chosen during the design of the refrigerator.
C1, C2, C3 (thermal capacity) indicated on the electric equivalent circuit shown in figure 6, do not affect the Tc computation in steady state conditions.

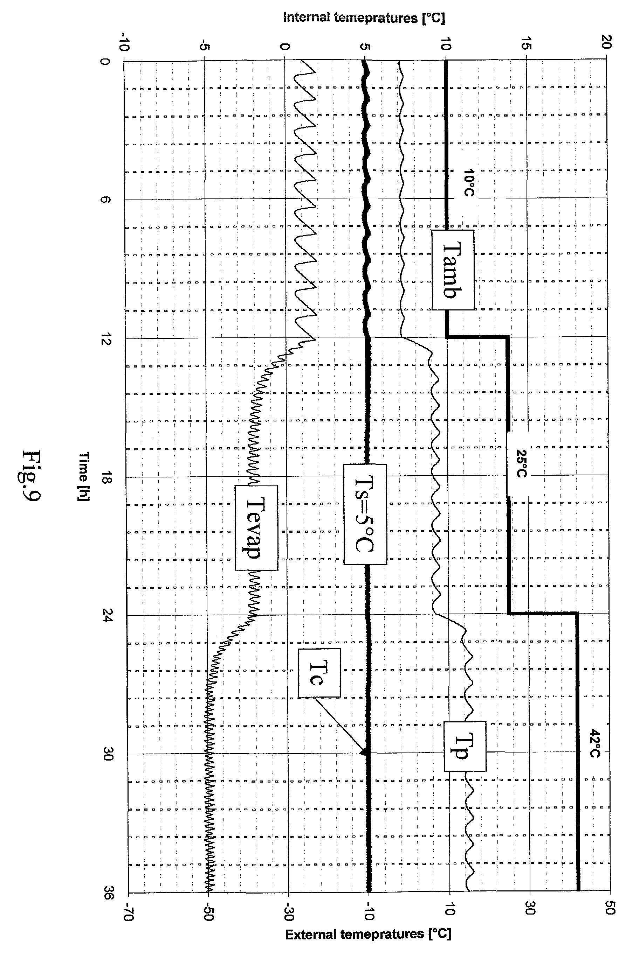

As it is clearly shown in figure 9, with the control system according to the invention the temperature detected by the probe can change, for instance, due to changes of ambient temperature Tamb; nevertheless the computed temperature Tc, which is indicative of the actual temperature of the food inside the refrigerator or freezer cavity is maintained constant, with obvious advantages in term of food conservation. In fig. 9 the actual temperature Tc and target temperature Ts are plotted when the external temperature is varying from 10°C to 42°C. As it can be seen the average of the Tc, that represents the food temperature, is non affected by the Tamb variation. This result can be obtained by using the Tevap or the Tamb as a second source of temperature to compute the heat flow.

Another advantage of the present invention is that the user avoids the need of changing the target temperature during the season's change. It is a common experience that, from winter to summer, the beverages or food stored in the fresh food compartment need a different set temperature adjustment. Another resetting will be also necessary, vice-versa, form summer to winter.

As the present invention refers to a precise temperature control technique, the main consequence is that the food is kept at constant temperature during all the 24 hours: by using the technique according to the invention optimum food conservation is obtained.

The method according to the invention can be implemented also in case a variable cooling capacity compressor (VCC) is used; in this case the temperature appliance control will provide the VCC with the proper cooling capacity, computed as described above.

The method according to the invention can be implemented for ON/OFF compressor as well. The ON/OFF state is determined on the bases of the Tc value and pre-determined hysteresis temperatures values.

Different methodologies can be used, in alternatives to the mentioned one, based on neural network technique or with Kalman filter implementation. According to figure 7, the Kalman filter is fed with temperature signals T1 and T2, these latter being either the temperature of the cavity probe and of the evaporator probe, or the temperature of the ambient probe and of the cavity probe. The Kalman filter is also fed with exogenous inputs such as, for instance, a signal indicative of the speed of the compressor (when a variable speed compressor is used) or a signal indicative of the on/off state of the compressor. The main purpose of these different techniques is the estimation of the Tc value and its relation with physics parameters to be discovered with empirical tests.

It is important to notice that, in case of using as a second temperature sensor on the evaporator, the technical solution according to the present invention doesn't require any additional cost because such sensor is already installed to establish the end of the defrosting function.

## Claims

1. Method for controlling the temperature inside a cavity of a cooling appliance provided with a first temperature sensor inside said cavity and with means for setting a target temperature inside the cavity, the method comprising the steps of : detecting a second temperature (Tevap, T2) in a zone different from the one where the first temperature sensor is placed, computing a third temperature (Tc) starting from the first and second temperatures (Tp, T1, Tevap, T2), such computation being based on empirical values determined from the actual thermal behaviour of the cavity, and feeding such third temperature (Tc) to a control system of the cooling appliance to which a target temperature (Ts) set by the user is fed as well,
**characterised in that** the zone where the second temperature (Tevap) is detected is on or in the proximity of an evaporator of the refrigeration circuit of the cooling appliance.

2. Method according to claim 1, in which the control system of the cooling appliance comprises a feedback loop to which the target temperature (Ts) is fed for assessing the control error (Terr), **characterised in that** the target temperature (Ts) is compared to the third temperature (Tc) in order to assess the control error (Terr).

3. Method according to any of the preceding claims, **characterised in that** the third temperature (Tc) is a function of the heat flow between the zone in which the first temperature sensor is placed and the zone in which the second temperature is detected.

4. Cooling appliance comprising a cavity where a temperature sensor is placed, and a control system for adjusting the performance of the appliance on the basis of a target temperature of the cavity set by the user, a second temperature sensor placed in a zone different from that in which the first temperature sensor is placed, the control system being apt to compute a third temperature (Tc) starting from the temperatures (Tp, Tevap) detected by the first and second sensors as a function of the thermal behaviour of the cavity, such third temperature (Tc) allowing a more accurate control of the actual temperature inside the cavity,
**characterised in that** the second temperature sensor is placed on or in the proximity of an evaporator of the refrigeration circuit of the cooling appliance.

5. Cooling appliance according to claim 4, **characterised in that** the third temperature (Tc) is a function of the heat flow between the zone in which the first temperature sensor is placed and the zone in which the second temperature is detected.

6. Cooling appliance according to claim 5, **characterised in that** the third temperature (Tc) is computed according to the following formula:

$$Tc = T_1 * \left( \frac{Rh2}{Rh1 + Rh2} \right) + T_2 * \left( \frac{Rh1}{Rh1 + Rh2} \right)$$

in which Rh1 represents the thermal resistance between the zone at a first temperature (T1) and the food placed in the cell; and Rh2 represents the thermal resistance between the food and the zone at a second temperature (T2).

7. Cooling appliance according to claim 5, **characterised in that** the third temperature (Tc) is computed according to a Kalman filter in which the two temperature inputs (T1, T2) plus additional exogenous inputs are considered.

8. Cooling appliance according to claim 9, **characterised in that** the third temperature (Tc) is computed according to a neural network in which the two temperatures inputs (T1, T2) plus additional suitable inputs are considered.

**Patentansprüche**

1. Eine Methode zur Kontrolle der Temperatur innerhalb eines Hohlraums eines Kühlgeräts, welches mit einem ersten Temperaturfühler im Innern des besagten Hohlraums bestückt ist, sowie mit Mitteln, um eine Zieltemperatur innerhalb des Hohlraums zu definieren, wobei die Methode die Schritte der Erfassung einer zweiten Temperatur (Tevap, T2) in einer unterschiedlichen Zone als die, in der der erste Temperaturfühler platziert ist, den Schritt der Berechnung einer dritten Temperatur (Tc), ausgehend von der ersten und der zweiten Temperatur (Tp, T1, Tevap, T2), wobei eine solche Berechnung auf empirischen Werten beruht, die vom aktuellen thermischen Verhalten des Hohlraums abgeleitet wurden, sowie die Eingabe dieser dritten Temperatur (Tc) an ein Steuersystem des Kühlgeräts, dem von einem Nutzer auch eine Zieltemperatur (Ts) eingegeben wurde,
**dadurch gekennzeichnet, dass** die Zone der zweiten Temperaturerfassung (Tevap) sich auf oder in der Nähe eines Verdampfers des Kühlkreislaufs des Kühlgeräts befindet.

2. Methode gemäß Anspruch 1, in der das Steuersystem des Kühlgeräts einen Rückführkreis umfasst, in den die Zieltemperatur (Ts) eingespeist wird, um den Steuerfehler zu bewerten (Terr), **dadurch gekennzeichnet, dass** die Zieltemperatur (Ts) mit der dritten Temperatur (Tc) verglichen wird, um den Steuerfehler (Terr) zu bewerten.

3. Methode gemäß einem beliebigen der vorstehenden Ansprüche, **dadurch gekennzeichnet, dass** die dritte Temperatur (Tc) eine Funktion des Wärmestroms zwischen der Zone ist, in der der erste Temperaturfühler platziert ist und der Zone, in der die zweite Temperatur erfasst wird.

4. Kühlgerät, umfassend einen Hohlraum in dem ein Temperaturfühler zum Einstellen der Leistung des Geräts auf der Basis einer, vom Nutzer eingestellten Zieltemperatur des Hohlraums angeordnet ist, wo ein zweiter Temperaturfühler in einer anderen Zone angeordnet ist als die, in welcher der erste Temperaturfühler platziert ist, wo das Steuersystem geeignet ist, eine dritte Temperatur (Tc) zu berechnen, ausgehend von den Temperaturen (Tp, Tevap), welche von dem ersten und dem zweiter Fühler als eine Funktion des thermischen Verhaltens des Hohlraums erfasst werden, und wobei eine solche dritte Temperatur (Tc) ermöglicht, eine präzisere Steuerung der aktuellen Temperatur im Innern des Hohlraums durchzuführen, **dadurch gekennzeichnet, dass** der zweite Temperaturfühler auf oder in der Nähe eines Verdampfers des Kühlkreises des Kühlgeräts platziert ist.

5. Kühlgerät gemäß Anspruch 4, **dadurch gekennzeichnet, dass** die dritte Temperatur (Tc) eine Funktion des Wärmestroms zwischen der Zone ist, in welcher der erste Temperatursensor platziert ist und der Zone, in der die zweite Temperatur erfasst wird.

6. Kühlgerät gemäß Anspruch 5, **dadurch gekennzeichnet, dass** die dritte Temperatur (Tc) mit folgender Formel berechnet wird:

$$Tc = T_1 * \left( \frac{Rh2}{Rh1 + Rh2} \right) + T_2 * \left( \frac{Rh1}{Rh1 + Rh2} \right)$$

Worin Rh1 = Wärmewiderstand zwischen der Zone bei einer ersten Temperatur (T1) und dem Nahrungsmittel in der Zelle; und Rh2 = Wärmewiderstand zwischen dem Nahrungsmittel und der Zone bei einer zweiten Temperatur (T2).

7. Kühlgerät gemäß Anspruch 5, **dadurch gekennzeichnet, dass** die dritte Temperatur (Tc) mit einem Kalman-Filter berechnet wird, in dem die beiden Temperatur-Inputs (T1, T2) plus zusätzliche exogene Inputs berücksichtigt werden.

8. Kühlgerät gemäß Anspruch 5, **dadurch gekennzeichnet, dass** die dritte Temperatur (Tc) gemäß einem neuralen Netz berechnet wird, in dem die beiden Temperatur-Inputs (T1, T2) plus zusätzliche geeignete Inputs berücksichtigt werden.

## Revendications

1. Procédé pour commander la température à l'intérieur d'une cavité d'un appareil de refroidissement muni d'un premier capteur de température à l'intérieur de ladite cavité et d'un moyen pour fixer une température cible à l'intérieur de la cavité, le procédé comprenant les étapes de : détection d'une deuxième température (Tevap, T2) dans une zone différente de l'endroit où le premier capteur de température est placé, calcul d'une troisième température (Tc) en démarrant à partir des première et deuxième températures (Tp, T1, Tevap, T2), un tel calcul étant basé sur des valeurs empiriques déterminées à partir du comportement thermique réel de la cavité, et amenée d'une telle troisième température (Tc) à un système de commande de l'appareil de refroidissement auquel une température cible (Ts) fixée par l'utilisateur est aussi amenée,
**caractérisé en ce que** la zone où la deuxième température (Tevap) est détectée est sur ou à proximité d'un évaporateur du circuit de réfrigération de l'appareil de refroidissement.

2. Procédé selon la revendication 1, dans lequel le système de commande de l'appareil de refroidissement comprend une chaîne de rétroaction à laquelle la température cible (Ts) est amenée pour évaluer l'erreur de commande (Terr),
**caractérisé en ce que** la température cible (Ts) est comparée à la troisième température (Tc) afin d'évaluer l'erreur de commande (Terr).

3. Procédé selon l'une quelconque des revendications précédentes,
**caractérisé en ce que** la troisième température (Tc) est une fonction du flux de chaleur entre la zone dans laquelle le premier capteur de température est placé et la zone dans laquelle la deuxième température est détectée.

4. Appareil de refroidissement comprenant une cavité où un capteur de température est placé, et un système de commande pour ajuster la performance de l'appareil sur la base d'une température cible de la cavité fixée par l'utilisateur, un second capteur de température placé dans une zone différente de celle dans laquelle le premier capteur de température est placé, le système de commande étant apte à calculer une troisième température (Tc) en démarrant à partir des températures (Tp, Tevap) détectées par les premier et second capteurs comme une fonction du comportement thermique de la cavité, une telle troisième température (Tc) permettant une commande plus précise de la température réelle à l'intérieur de la cavité,
**caractérisé en ce que** le second capteur de température est placé sur ou à proximité d'un évaporateur du circuit de réfrigération de l'appareil de refroidissement.

5. Appareil de refroidissement selon la revendication 4, **caractérisé en ce que** la troisième température (Tc) est une fonction du flux de chaleur entre la zone dans laquelle le premier capteur de température est placé et la zone dans laquelle la deuxième température est détectée.

6. Appareil de refroidissement selon la revendication 5, **caractérisé en ce que** la troisième température (Tc) est calculée selon la formule suivante :

$$Tc = T_1 * \left( \frac{Rh2}{Rh1 + Rh2} \right) + T_2 * \left( \frac{Rh1}{Rh1 + Rh2} \right)$$

dans laquelle Rh1 représente la résistance thermique entre la zone à une première température (T1) et la nourriture placée dans la cellule ; et Rh2 représente la résistance thermique entre la nourriture et la zone à une deuxième température (T2).

7. Appareil de refroidissement selon la revendication 5, **caractérisé en ce que** la troisième température (Tc) est calculée selon un filtre de Kalman dans lequel les deux entrées de température (T1, T2) plus des entrées exogènes supplémentaires sont considérées.

8. Appareil de refroidissement selon la revendication 5, **caractérisé en ce que** la troisième température (Tc) est calculée selon un réseau neuronal dans lequel les deux entrées de températures (T1, T2) plus des entrées supplémentaires appropriées sont considérées.

Fig.4
(prior art)

Fig.1
(prior art)

Fig.2 (Prior art)

Fig.3 (prior art)

Fig.5 (prior art)

Fig.6

Fig.7

Fig.8

Fig.9

**EP 1 450 230 B1**

**Patent documents cited in the description**

- US 5765383 A